(19) Europäisches Patentamt
European Patent Office
Office européen des brevets

(11) **EP 2 713 663 A1**

## (12) EUROPEAN PATENT APPLICATION
published in accordance with Art. 153(4) EPC

(43) Date of publication:
**02.04.2014 Bulletin 2014/14**

(21) Application number: **12867728.3**

(22) Date of filing: **31.07.2012**

(51) Int Cl.:
***H04W 56/00*** *(2009.01)*

(86) International application number:
**PCT/CN2012/079453**

(87) International publication number:
**WO 2014/019151 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventors:
• **CHEN, Jun**
**Shezhen, Guangdong 518129 (CN)**

• **XU, Wenying**
**Shezhen, Guangdong 518129 (CN)**
• **ZHENG, Xiaoxiao**
**Shezhen, Guangdong 518129 (CN)**
• **MA, Xueli**
**Shezhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **CHANNEL BOUNDARY LOCATING METHOD, USER TERMINAL AND BASE STATION**

(57) The present invention is applicable to the field of communications, and provides a method for receiving indication data and a base station, where the method includes: receiving cell timing difference information of a channel of a reference cell, and obtaining a boundary of a high speed-dedicated physical control channel (HS-DPCCH) through calculation according to the cell timing difference information; and obtaining a CQI sending time point of the HS-DPCCH and a reception time point of a high speed-shared control channel (HS-SCCH) through calculation according to the boundary of the HS-DPCCH. The technical solution provided in the specific embodiments of the present invention has an advantage of ensuring that a non-reference cell receives uplink data successfully in the case of Multiflow.

A base station of a non-reference cell receives cell timing difference information delivered by a network side — S11

The base station of the non-reference cell obtains a reception time point of an HS-SCCH through calculation according to the cell timing difference information — S12

The base station of the non-reference cell obtains boundary information of an HS-DPCCH of the non-reference cell according to the reception time point of the HS-SCCH — S13

FIG. 1

**Description**

**TECHNICAL FIELD**

The present invention belongs to the field of communications, and in particular, to a method for positioning a channel boundary, a user terminal, and a base station.

**BACKGROUND**

When the universal mobile telecommunications system (Universal Mobile Telecommunications System, UMTS) technology evolves into the release Rel-11, a multiflow (Multiflow) feature is introduced. The feature enables a plurality of cells at the same frequency or different frequencies to be configured to high-speed downlink shared channel (High-Speed Downlink Shared Channel, HS-DSCH) serving cells of a user equipment (User Equipment, UE), and user experience can be apparently improved. A downlink discontinuous reception (Discontinuous Reception, DRX) feature is introduced in the Rel-7 of the UMTS, a UE is enabled to discontinuously receive downlink data, and power consumption of the UE can be saved. In Multiflow, a certain timing offset may exist between downlink common channels of a plurality of HS-DSCH serving cells at the same frequency, and the timing offset is mainly derived from base station clock timing corresponding to a cell, a timing offset (Tcell) of a cell, and a timing difference (Tp) caused by air interface transmission.

A timing relation between HS-DSCH serving cells may specifically include: a high speed-shared control channel (High Speed-Shared Control Channel, HS-SCCH), a high speed-physical downlink shared channel (High Speed-Physical Downlink Shared Channel, HS-PDSCH), a high speed-dedicated physical control channel (High Speed-Dedicated Physical Control Channel, HS-DPCCH), and a fractional dedicated physical channel (Fractional Dedicated Physical Channel, F-DPCH), where the HS-PDSCH is a channel indicating HSDPA data transmission, the HS-SCCH bears data indication information, such as an identifier of a scheduling UE, the HS-PDSCH bears specific data information, the HS-DPCCH is feedback indication information for downlink data, such as channel condition indication and data reception feedback indication information, and the F-DPCH channel is a dedicated channel and is used to control power of a dedicated channel and control uplink channel data sending power of a UE. A fixed timing relation exists among these channels. From the perspective of a cell side, a starting point of the HS-DPCCH needs to be found to receive uplink data. According to a protocol specification, a cell needs to find a boundary of an HS-DPCCH backward as a boundary according to the starting point of the HS-SCCH, where the boundary of the HS-DPCCH is closest to the 1280 chip.

By taking a single frequency dual cell (Single Frequency Dual Cell, SF-DC) feature as an example, in the SF-DC feature, two serving cells exist, a downlink common channel in a cell has a certain timing difference between the cells, and the two cells may be located in the same base station or in different base stations. In the SF-DC, the downlink of a UE needs to receive data in the two cells, but the uplink needs to send data in only one cell, and the other cell also needs to demodulate data (in a cross-base station SF-DC scenario), and in this way, a UE side needs to designate a pairing relation for sub-frames received by downlink data. The two cells of the UE may be respectively defined as: a reference cell and a non-reference cell, or a timing reference cell and a non-timing reference cell, where the reference cell is a cell for which channel timing of the UE is the same as channel timing in the Rel-5 HSDPA, and the other cell is a non-reference cell. For example, HS-SCCH S_DRX =0 of the reference cell of the UE is paired with HS-SCCH S_DRX =0 of the non-reference cell, and after the UE receives data of these two sub-frames, the UE performs feedback on an HS-DPCCH according to an existing timing rule in the timing reference cell, where an HS-DPCCH and an HS-SCCH have a fixed timing relation. For the non-reference cell, a boundary of an HS-DPCCH is also to be found according to a protocol, but due to a reason of a downlink common channel timing difference between cells, an error occurs when the UE or the non-timing reference cell finds the boundary of the HS-DPCCH. The UE side receives HS-SCCH S_DRX =0 of the two cells simultaneously, and performs feedback through one HS-DPCCH, thereby causing that the UE or the non-reference cell positions the boundary of the HS-DPCCH erroneously, and finally affecting downlink data transmission performance.

**Technical Problem**

An objective of embodiments of the present invention is to provide a method for positioning a channel boundary, which aims to solve a problem in an existing technical solution that a non-reference cell positions a boundary of an HS-DPCCH erroneously and downlink data transmission performance is finally affected.

**Technical Solution**

In one aspect, an embodiment of the present invention provides a method for positioning a channel boundary, where the method includes:

receiving, by a base station of a non-reference cell, cell timing difference information delivered by a network side;

obtaining, by the base station of the non-reference cell, a reception time point of a high speed-shared control channel (HS-SCCH) through calculation according to the cell timing difference information; and

obtaining, by the base station of the non-reference cell, boundary information of a high speed-dedicated physical control channel (HS-DPCCH) of the non-reference cell according to the reception time point of the HS-SCCH.

Optionally, the cell timing difference information is $\tau_{DIFF}$, and the $\tau_{DIFF}$ is a timing difference between paired high speed-physical downlink shared channel (HS-PDSCH) sub-frames of a reference cell and the non-reference cell.

Optionally, the obtaining a reception time point of an HS-SCCH through calculation according to the cell timing difference information specifically includes:

obtaining the reception time point of the HS-SCCH through calculation according to formula 1.1, where the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle})$$
$$= 0 \qquad \text{formula 1.1,}$$

where the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when it is configured that the non-reference cell does not need additional HARQ-ACK processing time, the DRX_OFFSET is:

$$DRX\_OFFSET = \left\lfloor \frac{\dfrac{m_2}{10} - 11}{3} \right\rfloor - \left\lfloor \frac{\dfrac{m_2}{10} - \dfrac{\tau_{DIFF}}{2560} - 11}{3} \right\rfloor \qquad \text{formula 1.2}$$

or,

$$DRX\_OFFSET = \left\lceil \frac{\dfrac{m_2}{10} - 11}{3} \right\rceil - \left\lceil \frac{\dfrac{m_2}{10} - \dfrac{\tau_{DIFF}}{2560} - 11}{3} \right\rceil \qquad \text{formula 1.3}$$

or,

$$DRX\_OFFSET = \left\lfloor \frac{\dfrac{T_{TX\_diff2}}{2560} - 0.9}{3} \right\rfloor - \left\lfloor \frac{\dfrac{T_{TX\_diff2} - \tau_{DIFF}}{2560} - 0.9}{3} \right\rfloor \qquad \text{formula 1.4}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \quad \text{formula 1.5}$$

where the $m_2$ is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

Optionally, when it is configured that the non-reference cell needs additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} + \frac{\tau_{DIFF}}{2560} - 11}{3} \right\rfloor \quad \text{formula 1.6}$$

$$\text{or, } DRX\_OFFSET = \left\lceil \frac{\frac{m_2}{10} - 11}{3} \right\rceil - \left\lceil \frac{\frac{m_2}{10} + \frac{\tau_{DIFF}}{2560} - 11}{3} \right\rceil \quad \text{formula 1.7}$$

or,

$$DRX\_OFFSET = \left\lfloor \frac{\frac{T_{TX\_diff2}}{2560} - 0.9}{3} \right\rfloor - \left\lfloor \frac{\frac{T_{TX\_diff2} + \tau_{DIFF}}{2560} - 0.9}{3} \right\rfloor \quad \text{formula 1.8}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \quad \text{formula 1.9}$$

where the $m_2$ is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff\,2}/256) + 101.$$

Optionally, the obtaining boundary information of an HS-DPCCH of the non-reference cell according to the reception time point of the HS-SCCH specifically includes:

determining boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

Optionally, the obtaining boundary information of an HS-DPCCH of the non-reference cell according to the reception time point of the HS-SCCH specifically includes:

determining boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

In another aspect, a method for positioning a channel boundary is further provided, and the method includes:

receiving, by a user equipment, cell timing difference information delivered by a network side;
obtaining, by the user equipment, a reception time point of a high speed-shared control channel (HS-SCCH) of a non-reference cell through calculation according to the cell timing difference information; and
obtaining, by the user equipment, a boundary of a high speed-dedicated physical control channel (HS-DPCCH) of the non-reference cell according to the reception time point of the HS-SCCH.

Optionally, the cell timing difference information specifically is:

$$DRX\_OFFSET \text{ or } \tau_{DIFF},$$

where the DRX_OFFSET is a DRX offset and is specifically a parameter used to calculate channel timing of a UE in the non-reference cell, and takes a sub-frame as a unit; and the $\tau_{DIFF}$ is a timing difference between paired high speed-physical downlink shared channel (HS-PDSCH) sub-frames of a reference cell and the non-reference cell.

Optionally, the obtaining, by the user equipment, a reception time point of an HS-SCCH of a non-reference cell through calculation according to the cell timing difference information specifically includes:

obtaining the reception time point of the HS-SCCH through calculation according to formula 1.1, where the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle})$$
$$= 0 \qquad \text{formula 1.1,}$$

where the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when the cell timing difference information is $\tau_{DIFF}$ and it is configured that the non-reference cell does not need additional HARQ-ACK processing time, the DRX_OFFSET is:

$$DRX\_OFFSET = \left\lfloor \frac{\left|\frac{m_2}{10} - 11\right|}{3} - \frac{\left|\frac{m_2}{10} - \frac{\tau_{DIFF}}{2560} - 11\right|}{3} \right\rfloor \quad \text{formula 1.2}$$

or,

$$DRX\_OFFSET = \left\lceil \frac{\left|\frac{m_2}{10} - 11\right|}{3} \right\rceil - \left\lceil \frac{\left|\frac{m_2}{10} - \frac{\tau_{DIFF}}{2560} - 11\right|}{3} \right\rceil \quad \text{formula 1.3}$$

or,

$$DRX\_OFFSET = \left\lfloor \frac{\left|\frac{T_{TX\_diff2}}{2560} - 0.9\right|}{3} \right\rfloor - \frac{\left|\frac{T_{TX\_diff2} - \tau_{DIFF}}{2560} - 0.9\right|}{3} \quad \text{formula 1.4}$$

$$\text{or, } DRX\_OFFSET = \left\lceil \frac{\left|\frac{T_{TX\_diff2}}{2560} - 0.9\right|}{3} \right\rceil - \left\lceil \frac{\left|\frac{T_{TX\_diff2} - \tau_{DIFF}}{2560} - 0.9\right|}{3} \right\rceil \quad \text{formula 1.5}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (T_{TX\_diff2}/256) + 101.$$

Optionally, when the cell timing difference information is $\tau_{DIFF}$ and it is configured that the non-reference cell needs additional HARQ-ACK processing time, the DRX_OFFSET is:

$$DRX\_OFFSET = \left|\frac{\left|\frac{m_2}{10} - 11\right|}{3} - \frac{\left|\frac{m_2}{10} + \frac{\tau_{DIFF}}{2560} - 11\right|}{3}\right| \quad \text{formula 1.6}$$

$$\text{or, DRX\_OFFSET} = \left\lceil \frac{\dfrac{m_2}{10} - 11}{3} \right\rceil - \left\lceil \frac{\dfrac{m_2}{10} + \dfrac{\tau_{\text{DIFF}}}{2560} - 11}{3} \right\rceil \qquad \text{formula 1.7}$$

or,

$$\text{DRX\_OFFSET} = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \qquad \text{formula 1.8}$$

or,

$$\text{DRX\_OFFSET} = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \qquad \text{formula 1.9}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (^{T_{TX\_diff2}}/256) + 101.$$

Optionally, the obtaining, by the user equipment, a boundary of an HS-DPCCH of the non-reference cell according to the reception time point of the HS-SCCH specifically includes:

when it is configured that the non-reference cell does not need additional HARQ-ACK processing time, determining boundary information of an HS-DPCCH sub-frame that is closest to time of 1280 - $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n; or
when it is configured that the non-reference cell needs additional HARQ-ACK processing time, determining boundary information of an HS-DPCCH sub-frame that is closest to time of 1280 + $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

Optionally, the obtaining, by the user equipment, a boundary of an HS-DPCCH of the non-reference cell according to the reception time point of the HS-SCCH specifically includes:

determining boundary information of an HS-DPCCH sub-frame that is closest to time of 1280 - $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

Optionally, the obtaining, by the user equipment, a boundary of an HS-DPCCH of the non-reference cell according to the reception time point of the HS-SCCH specifically includes:

determining boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

In still another aspect, the present invention provides a base station, where the base station includes: a receiving unit, a first calculating unit, and a second calculating unit, where
the receiving unit is configured to receive cell timing difference information delivered by a network side, and send the cell timing difference information to the first calculating unit;
the first calculating unit is configured to obtain a reception time point of a high speed-shared control channel (HS-SCCH) through calculation according to the cell timing difference information, and send the reception time point of the HS-SCCH to the second calculating unit; and
the second calculating unit is configured to obtain boundary information of a high speed-dedicated physical control channel (HS-DPCCH) of a non-reference cell according to the reception time point of the HS-SCCH.

Optionally, the cell timing difference information is $\tau_{DIFF}$, and the $\tau_{DIFF}$ is a timing difference between paired high speed-physical downlink shared channel (HS-PDSCH) sub-frames of a reference cell and the non-reference cell.

Optionally, the first calculating unit is further configured to obtain the reception time point of the HS-SCCH through calculation according to formula 1.1, where the reception time point is: a combination of CFN_DRX and S_DRX;

$$((5*CFN\_DRX - UE\_DTX\_DRX\_Offset + S\_DRX + DRX\_OFFSET) \bmod UE\_DRX\ cycle) = 0$$

formula 1.1,

where the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when it is configured that the non-reference cell does not need additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \qquad \text{formula 1.2}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \qquad \text{formula 1.3}$$

or,

$$DRX\_OFFSET = \left\lceil \frac{\left\lceil \dfrac{T_{TX\_diff2}}{2560} - 0.9 \right\rceil}{3} \right\rceil - \left\lceil \frac{\left\lceil \dfrac{T_{TX\_diff2} - \tau_{DIFF}}{2560} - 0.9 \right\rceil}{3} \right\rceil \qquad \text{formula 1.4}$$

or,

$$DRX\_OFFSET = \left\lceil \frac{\left\lceil \dfrac{T_{TX\_diff2}}{2560} - 0.9 \right\rceil}{3} \right\rceil - \left\lfloor \frac{\left\lceil \dfrac{T_{TX\_diff2} - \tau_{DIFF}}{2560} - 0.9 \right\rceil}{3} \right\rfloor \qquad \text{formula 1.5}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (^{T_{TX\_diff2}}/256) + 101.$$

Optionally, when it is configured that the non-reference cell needs additional HARQ-ACK processing time, the DRX_OFFSET is:

$$DRX\_OFFSET = \left\lceil \frac{\left\lceil \dfrac{m_2}{10} - 11 \right\rceil}{3} \right\rceil - \left\lceil \frac{\left\lceil \dfrac{m_2}{10} + \dfrac{\tau_{DIFF}}{2560} - 11 \right\rceil}{3} \right\rceil \qquad \text{formula 1.6}$$

or,

$$DRX\_OFFSET = \left\lceil \frac{\left\lceil \dfrac{m_2}{10} - 11 \right\rceil}{3} \right\rceil - \left\lceil \frac{\left\lceil \dfrac{m_2}{10} + \dfrac{\tau_{DIFF}}{2560} - 11 \right\rceil}{3} \right\rceil \qquad \text{formula 1.7}$$

or,

$$DRX\_OFFSET = \left\lceil \frac{\left\lceil \dfrac{T_{TX\_diff2}}{2560} - 0.9 \right\rceil}{3} \right\rceil - \left\lceil \frac{\left\lceil \dfrac{T_{TX\_diff2} + \tau_{DIFF}}{2560} - 0.9 \right\rceil}{3} \right\rceil \qquad \text{formula 1.8}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \qquad \text{formula 1.9}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (T_{TX\_diff2}/256) + 101.$$

Optionally, the second calculating unit is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

Optionally, the second calculating unit is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

In a next aspect, a user equipment is further provided, and the user equipment includes: a receiving unit, a first calculating unit, and a second calculating unit, where
the receiving unit is configured to receive cell timing difference information delivered by a network side, and send the cell timing difference information to the first calculating unit;
the first calculating unit is configured to obtain a reception time point of a high speed-shared control channel (HS-SCCH) of a non-reference cell through calculation according to the cell timing difference information, and send the reception time point of the HS-SCCH to the second calculating unit; and
the second calculating unit is configured to obtain a boundary of a high speed-dedicated physical control channel (HS-DPCCH) of the non-reference cell according to the reception time point of the HS-SCCH.

Optionally, the cell timing difference information specifically is:

$$DRX\_OFFSET \text{ or } \tau_{DIFF},$$

where the DRX_OFFSET is a DRX offset and is specifically a parameter used to calculate channel timing of a UE in the non-reference cell, and takes a sub-frame as a unit; and the $\tau_{DIFF}$ is a timing difference between paired high speed-physical downlink shared channel (HS-PDSCH) sub-frames of a reference cell and the non-reference cell.

Optionally, the first calculating unit is further configured to obtain the reception time point of the HS-SCCH through calculation according to formula 1.1, where the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle}) = 0 \qquad \text{formula 1.1,}$$

where the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when the cell timing difference information is $\tau_{\text{DIFF}}$ and it is configured that the non-reference cell does not need additional HARQ-ACK processing time, the DRX_OFFSET is:

$$\text{DRX\_OFFSET} = \left\lfloor \frac{\dfrac{m_2}{10} - 11}{3} \right\rfloor - \left\lfloor \frac{\dfrac{m_2}{10} - \dfrac{\tau_{\text{DIFF}}}{2560} - 11}{3} \right\rfloor \quad \text{formula 1.2}$$

or,

$$\text{DRX\_OFFSET} = \left\lceil \frac{\dfrac{m_2}{10} - 11}{3} \right\rceil - \left\lceil \frac{\dfrac{m_2}{10} - \dfrac{\tau_{\text{DIFF}}}{2560} - 11}{3} \right\rceil \quad \text{formula 1.3}$$

or,

$$\text{DRX\_OFFSET} = \left\lfloor \frac{\dfrac{T_{TX\_diff2}}{2560} - 0.9}{3} \right\rfloor - \left\lfloor \frac{\dfrac{T_{TX\_diff2} - \tau_{\text{DIFF}}}{2560} - 0.9}{3} \right\rfloor \quad \text{formula 1.4}$$

or,

$$\text{DRX\_OFFSET} = \left\lceil \frac{\dfrac{T_{TX\_diff2}}{2560} - 0.9}{3} \right\rceil - \left\lceil \frac{\dfrac{T_{TX\_diff2} - \tau_{\text{DIFF}}}{2560} - 0.9}{3} \right\rceil \quad \text{formula 1.5}$$

where the $m_2$ is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

Optionally, when the cell timing difference information is $\tau_{\text{DIFF}}$ and it is configured that the non-reference cell needs additional HARQ-ACK processing time, the DRX_OFFSET is:

$$DRX\_OFFSET = \left| \frac{\dfrac{m_2}{10} - 11}{3} \right| - \left| \frac{\dfrac{m_2}{10} + \dfrac{\tau_{DIFF}}{2560} - 11}{3} \right| \quad \text{formula 1.6}$$

or,

$$DRX\_OFFSET = \left\lceil \frac{\dfrac{m_2}{10} - 11}{3} \right\rceil - \left\lceil \frac{\dfrac{m_2}{10} + \dfrac{\tau_{DIFF}}{2560} - 11}{3} \right\rceil \quad \text{formula 1.7}$$

or,

$$DRX\_OFFSET = \left| \frac{\dfrac{T_{TX\_diff2}}{2560} - 0.9}{3} \right| - \left| \frac{\dfrac{T_{TX\_diff2} + \tau_{DIFF}}{2560} - 0.9}{3} \right| \quad \text{formula 1.8}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} + \tau_{DIFF}}{2560} - 0.9}{3} \right\rceil \quad \text{formula 1.9}$$

where the $m_2$ is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

Optionally, the second calculating unit is further configured to:

when it is configured that the non-reference cell does not need additional HARQ-ACK processing time, determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or

when it is configured that the non-reference cell needs additional HARQ-ACK processing time, determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

where n in the CFN_DRX n is a sequence number of the CFN_DRX and n in the HS-DPCCH CFN_DRX n is a sequence number of the HS-DPCCH CFN_DRX.

Optionally, the second calculating unit is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

where n in the CFN_DRX n is a sequence number of the CFN_DRX and n in the HS-DPCCH CFN_DRX n is a sequence number of the HS-DPCCH CFN_DRX.

Optionally, the second calculating unit is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

where n in the CFN_DRX n is a sequence number of the CFN_DRX and n in the HS-DPCCH CFN_DRX n is a sequence number of the HS-DPCCH CFN_DRX.

In yet another aspect, a base station is provided, and the base station includes: a receiver and a processor, where an output end of the receiver is connected to the processor, where

the receiver is configured to receive cell timing difference information delivered by a network side, and send the cell timing difference information to the processor through the output end; and

the processor is configured to obtain a reception time point of a high speed-shared control channel (HS-SCCH) through calculation according to the cell timing difference information, and obtain boundary information of a high speed-dedicated physical control channel (HS-DPCCH) of a non-reference cell according to the reception time point of the HS-SCCH.

Optionally, the cell timing difference information is $\tau_{DIFF}$, and the $\tau_{DIFF}$ is a timing difference between paired high speed-physical downlink shared channel (HS-PDSCH) sub-frames of a reference cell and the non-reference cell.

Optionally, the processor is further configured to obtain the reception time point of the HS-SCCH through calculation according to formula 1.1, where the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle}) = 0 \qquad \text{formula 1.1,}$$

where the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when it is configured that the non-reference cell does not need additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \qquad \text{formula 1.2}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \qquad \text{formula 1.3}$$

or,

$$DRX\_OFFSET = \left\lfloor \left| \frac{\dfrac{T_{TX\_diff2}}{2560} - 0.9}{3} \right| - \left| \frac{\dfrac{T_{TX\_diff2} - \tau_{DIFF}}{2560} - 0.9}{3} \right| \right\rfloor \quad \text{formula 1.4}$$

or,

$$DRX\_OFFSET = \left\lceil \left| \frac{\dfrac{T_{TX\_diff2}}{2560} - 0.9}{3} \right| - \left| \frac{\dfrac{T_{TX\_diff2} - \tau_{DIFF}}{2560} - 0.9}{3} \right| \right\rceil \quad \text{formula 1.5}$$

where the $m_2$ is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

Optionally, when it is configured that the non-reference cell needs additional HARQ-ACK processing time, the DRX_OFFSET is:

$$DRX\_OFFSET = \left\lfloor \left| \frac{\dfrac{m_2}{10} - 11}{3} \right| - \left| \frac{\dfrac{m_2}{10} + \dfrac{\tau_{DIFF}}{2560} - 11}{3} \right| \right\rfloor \quad \text{formula 1.6}$$

or,

$$DRX\_OFFSET = \left\lceil \left| \frac{\dfrac{m_2}{10} - 11}{3} \right| - \left| \frac{\dfrac{m_2}{10} + \dfrac{\tau_{DIFF}}{2560} - 11}{3} \right| \right\rceil \quad \text{formula 1.7}$$

or,

$$DRX\_OFFSET = \left\lfloor \left| \frac{\dfrac{T_{TX\_diff2}}{2560} - 0.9}{3} \right| - \left| \frac{\dfrac{T_{TX\_diff2} + \tau_{DIFF}}{2560} - 0.9}{3} \right| \right\rfloor \quad \text{formula 1.8}$$

or,

$$\text{DRX\_OFFSET} = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \quad \text{formula 1.9}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$\text{m2} = (T_{TX\_diff2}/256) + 101.$$

Optionally, the processor is further configured to determine boundary information of an HS-DPCCH sub-frame that is closest to time of 1280 - $\tau_{\text{DIFF}}$ chips after the reception time point of the HS-SCCH, namely, a CFN_DRX n radio frame starting point of the HS-SCCH, as the boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

Optionally, the processor is further configured to determine boundary information of an HS-DPCCH sub-frame that is closest to time of 1280 + $\tau_{\text{DIFF}}$ chips after the reception time point of the HS-SCCH, namely, a CFN_DRX n radio frame starting point of the HS-SCCH, as the boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

In a subsequent aspect, a user equipment is provided, and the user equipment includes: an antenna and a processor, where
the antenna is configured to receive cell timing difference information delivered by a network side, and send the cell timing difference information to the processor; and
the processor is configured to obtain a reception time point of a high speed-shared control channel (HS-SCCH) of a non-reference cell through calculation according to the cell timing difference information, and obtain a boundary of a high speed-dedicated physical control channel (HS-DPCCH) of the non-reference cell according to the reception time point of the HS-SCCH.

Optionally, the cell timing difference information specifically is:

DRX_OFFSET or $\tau_{\text{DIFF}}$,

where the DRX_OFFSET is a parameter used to calculate channel timing of a UE in the non-reference cell; and the $\tau_{\text{DIFF}}$ is a timing difference between paired HS-PDSCH sub-frames of a reference cell and the non-reference cell.

Optionally, the processor is further configured to obtain the reception time point of the HS-SCCH through calculation according to formula 1.1, where the reception time point is: a combination of CFN_DRX and S_DRX;

$$((5*\text{CFN\_DRX} - \text{UE\_DTX\_DRX\_Offset} + \text{S\_DRX} + \text{DRX\_OFFSET}) \text{ MOD UE\_DRX cycle})$$
$$= 0 \qquad \text{formula 1.1,}$$

where the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

Optionally, when the cell timing difference information is $\tau_{\text{DIFF}}$ and it is configured that the non-reference cell does not need additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \quad \text{formula 1.2}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \quad \text{formula 1.3}$$

or,

$$DRX\_OFFSET = \left\lfloor \frac{\frac{T_{TX\_diff2}}{2560} - 0.9}{3} \right\rfloor - \left\lfloor \frac{\frac{T_{TX\_diff2} - \tau_{DIFF}}{2560} - 0.9}{3} \right\rfloor \quad \text{formula 1.4}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \quad \text{formula 1.5}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (T_{TX\_diff2}/256) + 101.$$

Optionally, when the cell timing difference information is $\tau_{DIFF}$ and it is configured that the non-reference cell needs additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} + \frac{\tau_{DIFF}}{2560} - 11}{3} \right\rfloor \quad \text{formula 1.6}$$

or,

$$DRX\_OFFSET = \left\lceil \frac{\frac{m_2}{10} - 11}{3} \right\rceil - \left\lceil \frac{\frac{m_2}{10} + \frac{\tau_{DIFF}}{2560} - 11}{3} \right\rceil \quad \text{formula 1.7}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \quad \text{formula 1.8}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \quad \text{formula 1.9}$$

where the m2 is a timing difference between an uplink DPCCH and an uplink HS-DPCCH of the non-reference cell; and the $T_{TX\_diff2}$ is a timing difference between an F-DPCH and an HS-PDSCH of the non-reference cell, and a transformation relation between the $T_{TX\_diff2}$ and the m2 is:

$$m2 = (T_{TX\_diff2}/256) + 101.$$

Optionally, the processor is further configured to:

When it is configured that the non-reference cell does not need additional HARQ-ACK processing time, determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or
when it is configured that the non-reference cell needs additional HARQ-ACK processing time, determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,
where n in the CFN_DRX n is a sequence number of the CFN_DRX and n in the HS-DPCCH CFN_DRX n is a sequence number of the HS-DPCCH CFN_DRX.

Optionally, the processor is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

Optionally, the processor is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n, where n in the CFN_DRX n is a sequence number of the CFN_DRX and n in the HS-DPCCH CFN_DRX n is a sequence number of the HS-DPCCH CFN_DRX.

**Beneficial Effect**

In the embodiments of the present invention, the technical solution provided in the present invention has an advantage that a boundary of an HS-DPCCH is positioned accurately, thereby enabling a non-reference cell to learn correct data transmission feedback information and CQI information, and improving reliability of downlink data transmission.

**BRIEF DESCRIPTION OF DRAWINGS**

FIG. 1 is a flow chart of a method for positioning a channel boundary provided in a specific embodiment of the present invention;
FIG. 2 is a flow chart of another method for positioning a channel boundary provided in a specific embodiment of the present invention;
FIG. 3 is a structural diagram of a base station provided in a specific embodiment of the present invention;
FIG. 4 is a structural diagram of a user equipment provided in a specific embodiment of the present invention;
FIG. 5 is a structural diagram of another base station provided in a specific embodiment of the present invention; and
FIG. 6 is a structural diagram of another user equipment provided in a specific embodiment of the present invention.

**DESCRIPTION OF EMBODIMENTS**

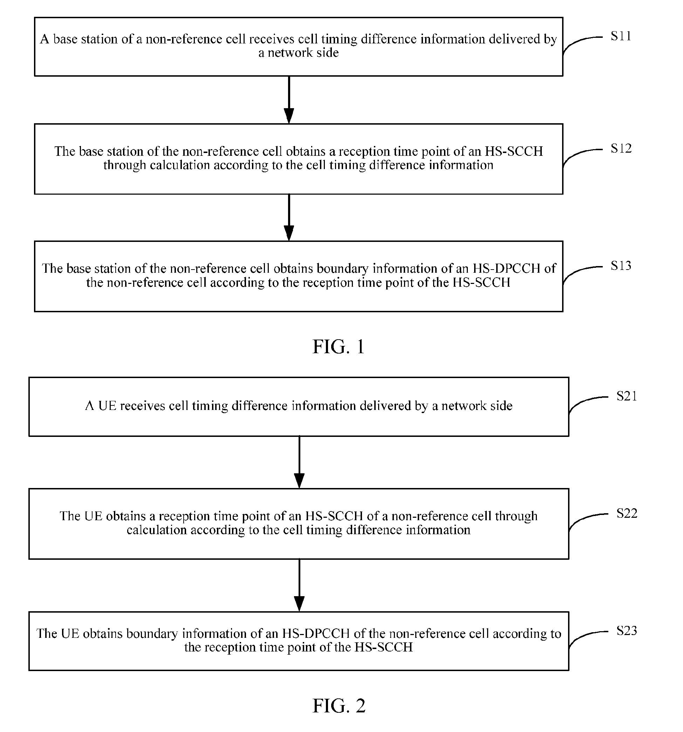

To make the objectives, technical solutions, and advantages of the present invention more comprehensible, the following describes the present invention in further detail with reference to the accompanying drawings and embodiments. It is understandable that specific embodiments described herein are only used to explain the present invention but are not intended to limit the present invention.
A specific embodiment of the present invention provides a method for positioning a channel boundary, where the method is completed by a base station of a non-reference cell, and the method, as shown in FIG. 1, includes:

S11: A base station of a non-reference cell receives cell timing difference information delivered by a network side.
S12: The base station of the non-reference cell obtains a reception time point of an HS-SCCH through calculation according to the cell timing difference information.
S13: The base station of the non-reference cell obtains boundary information of an HS-DPCCH of the non-reference cell according to the reception time point of the HS-SCCH.

With the method provided in the specific embodiment of the present invention, a boundary of an HS-DPCCH of a non-reference cell is adjusted through cell timing time difference information delivered by a network side, so that the boundary of the HS-DPCCH of the non-reference cell is positioned accurately, thereby enabling the non-reference cell to learn correct data transmission feedback information and CQI information, and improving reliability of downlink data transmission.
It should be noted that, the cell timing difference information in S 11 may specifically be $\tau_{DIFF}$, and the $\tau_{DIFF}$ is a timing difference between paired HS-PDSCH sub-frames of a reference cell and the non-reference cell.
A method for implementing S12 may specifically be: determining the reception time point of the HS-SCCH according to the following formula 1.1, where the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle})$$

$$= 0 \qquad \text{(formula 1.1),}$$

where the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.
It should be additionally noted that, for meanings of parameters in formula 1.1 to formula 1.9 in the embodiments of the present invention, reference may be made to definitions in 3GPP 25.214.
It should be noted that, a method for calculating the DRX_OFFSET may be:

when it is configured that the non-reference cell does not need additional HARQ-ACK processing time,

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \quad \text{(formula 1.2)}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \quad \text{(formula 1.3)}$$

or,

$$DRX\_OFFSET = \left\lfloor \frac{\frac{T_{TX\_diff2}}{2560} - 0.9}{3} \right\rfloor - \left\lfloor \frac{\frac{T_{TX\_diff2} - \tau_{DIFF}}{2560} - 0.9}{3} \right\rfloor \quad \text{(formula 1.4)}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \quad \text{(formula 1.5)}$$

where the m2 is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between a value of the parameter and the m2 is:

$$m2 = (T_{TX\_diff2}/256) + 101.$$

When it is configured that the non-reference cell needs additional HARQ-ACK processing time, a method for calculating the DRX_OFFSET may be:

$$DRX\_OFFSET = \left\lfloor \frac{\dfrac{m_2}{10} - 11}{3} \right\rfloor - \left\lfloor \frac{\dfrac{m_2}{10} + \dfrac{\tau_{\text{DIFF}}}{2560} - 11}{3} \right\rfloor \quad \text{(formula 1.6)}$$

or,

$$DRX\_OFFSET = \left\lceil \frac{\dfrac{m_2}{10} - 11}{3} \right\rceil - \left\lceil \frac{\dfrac{m_2}{10} + \dfrac{\tau_{\text{DIFF}}}{2560} - 11}{3} \right\rceil \quad \text{(formula 1.7)}$$

or,

$$DRX\_OFFSET = \left\lfloor \frac{\dfrac{T_{TX\_diff2}}{2560} - 0.9}{3} \right\rfloor - \left\lfloor \frac{\dfrac{T_{TX\_diff2} + \tau_{\text{DIFF}}}{2560} - 0.9}{3} \right\rfloor \quad \text{(formula 1.8)}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \quad \text{(formula 1.9)}$$

Optionally, a specific method for implementing S 13 may be:

(1) when it is configured that the non-reference cell does not need additional HARQ-ACK processing time, determining boundary information of an HS-DPCCH sub-frame that is closest to time of 1280 - $\tau_{\text{DIFF}}$ chips after a CFN_DRX n radio frame starting point of the HS-SCCH as the boundary information of the HS-DPCCH, namely, HS-DPCCH CFN_DRX n; or
(2) when it is configured that the non-reference cell needs additional HARQ-ACK processing time, determining boundary information of an HS-DPCCH sub-frame that is closest to time of 1280 + $\tau_{\text{DIFF}}$ chips after a CFN_DRX n radio frame starting point of the HS-SCCH as the boundary information of the HS-DPCCH, namely, HS-DPCCH CFN_DRX n.

It should be noted that, if 1280 - $\tau_{\text{DIFF}}$ chips is a positive value, reckoning is performed backward starting from a radio frame starting point, and if 1280 - $\tau_{\text{DIFF}}$ chips is a negative value, reckoning is performed forward starting from the radio frame starting point,
where n in the CFN_DRX n is a sequence number of the CFN_DRX and n in the HS-DPCCH CFN_DRX n is a sequence number of the HS-DPCCH CFN_DRX.
A specific embodiment of the present invention further provides a method for positioning a channel boundary, where the method, as shown in FIG. 2, includes:

S21: A UE receives cell timing difference information delivered by a network side.
S22: The UE obtains a reception time point of an HS-SCCH of a non-reference cell through calculation according to the cell timing difference information.

S23: The UE obtains a boundary of an HS-DPCCH of the non-reference cell according to the reception time point of the HS-SCCH.

With the method provided in the specific embodiment of the present invention, a boundary of an HS-DPCCH of a non-reference cell is adjusted through cell timing time difference information delivered by a network side, so that the boundary of the HS-DPCCH of the non-reference cell is positioned accurately, thereby enabling the non-reference cell to learn correct data transmission feedback information and CQI information, and improving reliability of downlink data transmission.

Optionally, the cell timing difference information may specifically be: DRX_OFFSET. Definitely, in an actual application, the cell timing difference information may also specifically be: $\tau_{DIFF}$.

When the cell timing difference information is DRX_OFFSET, a method for implementing S22 may specifically be:

obtaining the reception time point of the HS-SCCH of the non-reference cell through calculation according to formula 1.1.

A method for implementing S23 may specifically be:

(1) when it is configured that the non-reference cell does not need additional HARQ-ACK processing time, determining boundary information of an HS-DPCCH sub-frame that is closest to time of 1280 - $\tau_{DIFF}$ chips after a CFN_DRX n radio frame starting point of the HS-SCCH as boundary information of the HS-DPCCH, namely, HS-DPCCH CFN_DRX n; or

(2) when it is configured that the non-reference cell needs additional HARQ-ACK processing time, determining boundary information of an HS-DPCCH sub-frame that is closest to time of 1280 + $\tau_{DIFF}$ chips after a CFN_DRX n radio frame starting point of the HS-SCCH as boundary information of the HS-DPCCH, namely, HS-DPCCH CFN_DRX n.

It should be noted that, if 1280 - $\tau_{DIFF}$ chips is a positive value, reckoning is performed backward starting from a radio frame starting point, and if 1280 - $\tau_{DIFF}$ chips is a negative value, reckoning is performed forward starting from the radio frame starting point.

It should be noted that, the $\tau_{DIFF}$ may be obtained through calculation according to formula 1.2 to formula 1.9, and a difference only lies in that, in this case, DRX_OFFSET in formula 1.2 to formula 1.9 is a known value, and $\tau_{DIFF}$ needs to be calculated.

When the cell timing difference information is DRX_OFFSET, a method for implementing S22 may specifically be:

obtaining the reception time point of the HS-SCCH of the non-reference cell through calculation according to formula 1.1, where for calculation of the DRX_OFFSET, reference may be made to formula 1.2 to formula 1.9.

A method for implementing S23 may specifically be:

(1) when it is configured that the non-reference cell does not need additional HARQ-ACK processing time, determining boundary information of an HS-DPCCH sub-frame that is closest to time of 1280 - $\tau_{DIFF}$ chips after a CFN_DRX n radio frame starting point of the HS-SCCH as boundary information of the HS-DPCCH, namely, HS-DPCCH CFN_DRX n; or

(2) when it is configured that the non-reference cell needs additional HARQ-ACK processing time, determining boundary information of an HS-DPCCH sub-frame that is closest to time of 1280 + $\tau_{DIFF}$ chips after a CFN_DRX n radio frame starting point of the HS-SCCH as boundary information of the HS-DPCCH, namely, HS-DPCCH CFN_DRX n.

It should be noted that, if 1280 - $\tau_{DIFF}$ chips is a positive value, reckoning is performed backward starting from a radio frame starting point, and if 1280 - $\tau_{DIFF}$ chips is a negative value, reckoning is performed forward starting from the radio frame starting point.

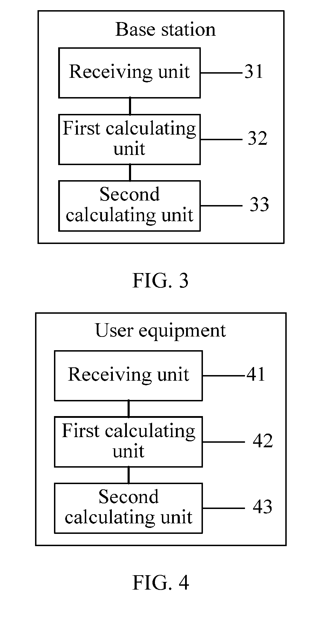

A specific embodiment of the present invention further provides a base station, where the base station, as shown in FIG. 3, includes: a receiving unit 31, a first calculating unit 32, and a second calculating unit 33, where

the receiving unit 31 is configured to receive cell timing difference information delivered by a network side, and send the cell timing difference information to the first calculating unit 32;

the first calculating unit 32 is configured to obtain a reception time point of an HS-SCCH through calculation according to the cell timing difference information, and send the reception time point of the HS-SCCH to the second calculating unit 33; and

the second calculating unit 33 is configured to obtain boundary information of an HS-DPCCH of a non-reference cell according to the reception time point of the HS-SCCH.

Optionally, the cell timing difference information is $\tau_{DIFF}$, and the $\tau_{DIFF}$ is a timing difference between paired HS-PDSCH sub-frames of a reference cell and the non-reference cell.

Optionally, the first calculating unit is further configured to obtain the reception time point of the HS-SCCH through calculation according to formula 1.1.

Optionally, when it is configured that the non-reference cell does not need additional HARQ-ACK processing time, for a method for calculating the DRX_OFFSET, reference may be made to description of formula 1.2 to formula 1.5, which is not described herein again.

Optionally, when it is configured that the non-reference cell needs additional HARQ-ACK processing time, for a method for calculating the DRX_OFFSET, reference may be made to description of formula 1.6 to formula 1.9, which is not described herein again.

Optionally, when it is configured that the non-reference cell does not need additional HARQ-ACK processing time, the second calculating unit 33 is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n.

Optionally, when it is configured that the non-reference cell does not need additional HARQ-ACK processing time, the second calculating unit 33 is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n.

With the base station provided in the specific embodiment of the present invention, a boundary of an HS-DPCCH of a non-reference cell is adjusted through cell timing time difference information delivered by a network side, so that the boundary of the HS-DPCCH of the non-reference cell is positioned accurately, thereby enabling the non-reference cell to learn correct data transmission feedback information and CQI information, and improving reliability of downlink data transmission.

A specific embodiment of the present invention further provides a user equipment, where the user equipment, as shown in FIG. 4, includes: a receiving unit 41, a first calculating unit 42, and a second calculating unit 43, where the receiving unit 41 is configured to receive cell timing difference information delivered by a network side, and send the cell timing difference information to the first calculating unit 42;

the first calculating unit 42 is configured to obtain a reception time point of an HS-SCCH of a non-reference cell through calculation according to the cell timing difference information, and send the reception time point of the HS-SCCH to the second calculating unit 43; and

the second calculating unit 43 is configured to obtain a boundary of an HS-DPCCH of the non-reference cell according to the reception time point of the HS-SCCH.

Optionally, the cell timing difference information specifically is:

DRX_OFFSET or $\tau_{DIFF}$,

where the DRX_OFFSET is a parameter used to calculate channel timing of a UE in the non-reference cell; and the $\tau_{DIFF}$ is a timing difference between paired HS-PDSCH sub-frames of a reference cell and the non-reference cell.

Optionally, the first calculating unit 42 is further configured to obtain the reception time point of the HS-SCCH through calculation according to formula 1.1.

Optionally, when the cell timing difference information is $\tau_{DIFF}$ and it is configured that the non-reference cell does not need additional HARQ-ACK processing time, for a method for calculating the DRX_OFFSET, reference may be specifically made to formula 1.2 to formula 1.5.

Optionally, when the cell timing difference information is $\tau_{DIFF}$ and it is configured that the non-reference cell needs additional HARQ-ACK processing time, for a method for calculating the DRX_OFFSET, reference may be made to formula 1.6 to formula 1.9.

Optionally, the second calculating unit 43 is further configured to:

when it is configured that the non-reference cell does not need additional HARQ-ACK processing time, determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or

when it is configured that the non-reference cell needs additional HARQ-ACK processing time, determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

It should be additionally noted that, when the cell timing difference information specifically is: DRX_OFFSET, the $\tau_{DIFF}$ may be obtained through calculation according to formula 1.2 to formula 1.9.

Optionally, when it is configured that the non-reference cell does not need additional HARQ-ACK processing time, the second calculating unit 43 is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

Optionally, when it is configured that the non-reference cell needs additional HARQ-ACK processing time, the second calculating unit 43 is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

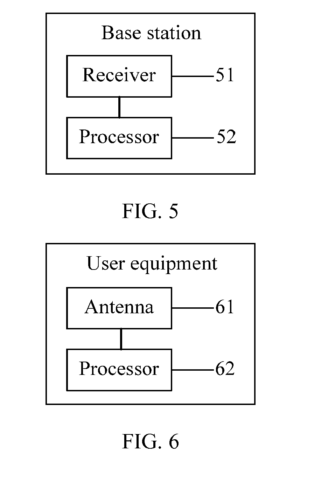

A specific embodiment of the present invention further provides a base station, where the base station, as shown in FIG. 5, includes: a receiver 51 and a processor 52, where an output end of the receiver 51 is connected to the processor 52, where

the receiver 51 is configured to receive cell timing difference information delivered by a network side, and send the cell timing difference information to the processor 52 through the output end; and

the processor 52 is configured to obtain a reception time point of an HS-SCCH through calculation according to the cell timing difference information, and obtain boundary information of an HS-DPCCH of a non-reference cell according to the reception time point of the HS-SCCH.

Optionally, the cell timing difference information is $\tau_{DIFF}$, and the $\tau_{DIFF}$ is a timing difference between paired HS-PDSCH sub-frames of a reference cell and the non-reference cell.

Optionally, the processor 52 is further configured to obtain the reception time point of the HS-SCCH through calculation according to formula 1.1.

Optionally, when it is configured that the non-reference cell does not need additional HARQ-ACK processing time, for a method for calculating the DRX_OFFSET, reference may be made to formula 1.2 to formula 1.5.

Optionally, when it is configured that the non-reference cell needs additional HARQ-ACK processing time, for a method for calculating the DRX_OFFSET, reference may be made to formula 1.6 to formula 1.9.

Optionally, when it is configured that the non-reference cell does not need additional HARQ-ACK processing time, the processor 52 is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n.

Optionally, when it is configured that the non-reference cell needs additional HARQ-ACK processing time, the processor 52 is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n.

A specific embodiment of the present invention further provides a user equipment, where the user equipment, as shown in FIG. 6, includes: an antenna 61 and a processor 62, where

the antenna 61 is configured to receive cell timing difference information delivered by a network side, and send the cell timing difference information to the processor 62; and

the processor 62 is configured to obtain a reception time point of an HS-SCCH of a non-reference cell through calculation according to the cell timing difference information, and obtain a boundary of an HS-DPCCH of the non-reference cell according to the reception time point of the HS-SCCH.

Optionally, the cell timing difference information specifically is:

DRX_OFFSET or $\tau_{DIFF}$,

where the DRX_OFFSET is a parameter used to calculate channel timing of a UE in the non-reference cell; and the $\tau_{DIFF}$ is a timing difference between paired HS-PDSCH sub-frames of a reference cell and the non-reference cell.

Optionally, the processor 62 is further configured to obtain the reception time point of the HS-SCCH through calculation according to formula 1.1.

Optionally, when the cell timing difference information is $\tau_{DIFF}$ and it is configured that the non-reference cell does not need additional HARQ-ACK processing time, for a method for calculating the DRX_OFFSET, reference may be made to formula 1.2 to formula 1.5.

Optionally, when the cell timing difference information is $\tau_{DIFF}$ and it is configured that the non-reference cell needs additional HARQ-ACK processing time, for a method for calculating the DRX_OFFSET, reference may be specifically made to formula 1.6 to formula 1.9.

Optionally, the processor 62 is further configured to:

when it is configured that the non-reference cell does not need additional HARQ-ACK processing time, determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or

when it is configured that the non-reference cell needs additional HARQ-ACK processing time, determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

Optionally, when it is configured that the non-reference cell does not need additional HARQ-ACK processing time, the processor 62 is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

Optionally, when it is configured that the non-reference cell needs additional HARQ-ACK processing time, the processor 62 is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n.

In the foregoing unit and system embodiments, the modules or units included are classified only according to functional logic, but are not limited to the foregoing classification as long as corresponding functions can be implemented; and in addition, specific names of various functional modules are intended to distinguish from each other but are not intended to limit the protection scope of the present invention.

Persons skilled in the art may understand that all or part of the steps of the technical solution provided in the embodiments of the present invention may be implemented by a program instructing relevant hardware, for example, may be implemented by a computer running a program. The program may be stored in a readable storage medium, such as a random access memory, a magnetic disk, or an optical disk.

The foregoing descriptions are merely exemplary embodiments of the present invention, but are not intended to limit the present invention. Any modification, equivalent replacement, or improvement made within the spirit and principle of the present invention shall all fall within the protection scope of the present invention.

**Claims**

**1.** A method for positioning a channel boundary, **characterized in** comprising:

receiving, by a base station of a non-reference cell, cell timing difference information delivered by a network side; obtaining, by the base station of the non-reference cell, a reception time point of a high speed-shared control channel (HS-SCCH) through calculation according to the cell timing difference information; and obtaining, by the base station of the non-reference cell, boundary information of a high speed-dedicated physical control channel (HS-DPCCH) of the non-reference cell according to the reception time point of the HS-SCCH.

**2.** The method according to claim 1, **characterized in that** the cell timing difference information is $\tau_{DIFF}$, and the $\tau_{DIFF}$ is a timing difference between paired high speed-physical downlink shared channel (HS-PDSCH) sub-frames of a reference cell and the non-reference cell.

**3.** The method according to claim 2, **characterized in that** the obtaining the reception time point of the HS-SCCH through the calculation according to the cell timing difference information specifically comprises:

obtaining the reception time point of the HS-SCCH through calculation according to formula 1.1, wherein the reception time point is: a combination of CFN_DRX and S_DRX;

$$((5*CFN\_DRX - UE\_DTX\_DRX\_Offset + S\_DRX + DRX\_OFFSET) \text{ MOD } UE\_DRX \text{ cycle})$$
$$= 0 \qquad \text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

**4.** The method according to claim 3, **characterized in that** when it is configured that the non-reference cell does not need additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \qquad \text{formula 1.2}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \qquad \text{formula 1.3}$$

or,

$$DRX\_OFFSET = \left\lfloor \frac{\frac{T_{TX\_diff2}}{2560} - 0.9}{3} \right\rfloor - \left\lfloor \frac{\frac{T_{TX\_diff2} - \tau_{DIFF}}{2560} - 0.9}{3} \right\rfloor \qquad \text{formula 1.4}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \qquad \text{formula 1.5}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**5.** The method according to claim 3, **characterized in that** when it is configured that the non-reference cell needs additional HARQ-ACK processing time, the DRX_OFFSET is:

$$DRX\_OFFSET = \left\lfloor \frac{\left| \dfrac{m_2}{10} - 11 \right|}{3} \right\rfloor - \left\lceil \frac{\left| \dfrac{m_2}{10} + \dfrac{\tau_{DIFF}}{2560} - 11 \right|}{3} \right\rceil \qquad \text{formula 1.6}$$

or,

$$DRX\_OFFSET = \left\lceil \frac{\dfrac{m_2}{10} - 11}{3} \right\rceil - \left\lceil \frac{\dfrac{m_2}{10} + \dfrac{\tau_{DIFF}}{2560} - 11}{3} \right\rceil \quad \text{formula 1.7}$$

or,

$$DRX\_OFFSET = \left\lfloor \frac{\left| \dfrac{T_{TX\_diff2}}{2560} - 0.9 \right|}{3} \right\rfloor - \left\lceil \frac{\left| \dfrac{T_{TX\_diff2} + \tau_{DIFF}}{2560} - 0.9 \right|}{3} \right\rceil \qquad \text{formula 1.8}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} + \tau_{DIFF}}{2560} - 0.9}{3} \right\rceil \qquad \text{formula 1.9}$$

wherein the $m_2$ is a timing difference between an uplink DPCCH and an uplink HS-DPCCH of the non-reference cell; and

the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**6.** The method according to claim 4, **characterized in that** the obtaining the boundary information of the HS-DPCCH of the non-reference cell according to the reception time point of the HS-SCCH specifically comprises:

determining boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n, wherein n in the CFN_DRX n is a sequence number of the CFN_DRX and n in the HS-DPCCH CFN_DRX n is a sequence number of the HS-DPCCH CFN_DRX.

**7.** The method according to claim 5, **characterized in that** the obtaining the boundary information of the HS-DPCCH of the non-reference cell according to the reception time point of the HS-SCCH specifically comprises:

determining boundary information of an HS-DPCCH sub-frame that is closest to time of 1280 + $\tau_{\text{DIFF}}$ chips after the reception time point of the HS-SCCH, namely, a CFN_DRX n radio frame starting point of the HS-SCCH, as the boundary information of the HS-DPCCH, namely, HS-DPCCH CFN_DRX n, wherein n in the CFN_DRX n is a sequence number of the CFN_DRX and n in the HS-DPCCH CFN_DRX n is a sequence number of the HS-DPCCH CFN_DRX.

**8.** A method for positioning a channel boundary, **characterized in** comprising:

receiving, by a user equipment, cell timing difference information delivered by a network side;
obtaining, by the user equipment, a reception time point of a high speed-shared control channel (HS-SCCH) of a non-reference cell through calculation according to the cell timing difference information; and
obtaining, by the user equipment, a boundary of a high speed-dedicated physical control channel (HS-DPCCH) of the non-reference cell according to the reception time point of the HS-SCCH.

**9.** The method according to claim 8, **characterized in that** the cell timing difference information specifically is:

DRX_OFFSET or $\tau_{\text{DIFF}}$,

wherein the DRX_OFFSET is a DRX offset and is specifically a parameter used to calculate channel timing of a UE in the non-reference cell, and takes a sub-frame as a unit; and the $\tau_{\text{DIFF}}$ is a timing difference between paired high speed-physical downlink shared channel (HS-PDSCH) sub-frames of a reference cell and the non-reference cell.

**10.** The method according to claim 9, **characterized in that** the obtaining, by the user equipment, the reception time point of the HS-SCCH of the non-reference cell through the calculation according to the cell timing difference information specifically comprises:

obtaining the reception time point of the HS-SCCH through calculation according to formula 1.1, wherein the reception time point is: a combination of CFN_DRX and S_DRX;

$$((5*\text{CFN\_DRX} - \text{UE\_DTX\_DRX\_Offset} + \text{S\_DRX} + \text{DRX\_OFFSET}) \text{ MOD UE\_DRX cycle})$$
$$= 0 \qquad \text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

**11.** The method according to claim 9, **characterized in that** when the cell timing difference information is $\tau_{\text{DIFF}}$ and it is configured that the non-reference cell does not need additional HARQ-ACK processing time, the DRX_OFFSET is:

$$\text{DRX\_OFFSET} = \left\lceil \frac{\dfrac{m_2}{10} - 11}{3} \right\rceil - \left\lceil \frac{\dfrac{m_2}{10} - \dfrac{\tau_{\text{DIFF}}}{2560} - 11}{3} \right\rceil \qquad \text{formula 1.2}$$

or,

$$\text{DRX\_OFFSET} = \left\lceil \frac{\dfrac{m_2}{10} - 11}{3} \right\rceil - \frac{\dfrac{m_2}{10} - \dfrac{\tau_{\text{DIFF}}}{2560} - 11}{3} \qquad \text{formula 1.3}$$

or,

$$DRX\_OFFSET = \left| \frac{\dfrac{T_{TX\_diff2}}{2560} - 0.9}{3} \right| - \left| \frac{\dfrac{T_{TX\_diff2} - \tau_{DIFF}}{2560} - 0.9}{3} \right| \qquad \text{formula 1.4}$$

or,

$$DRX\_OFFSET = \left| \frac{\dfrac{T_{TX\_diff2}}{2560} - 0.9}{3} \right| - \left\lceil \frac{\dfrac{T_{TX\_diff2} - \tau_{DIFF}}{2560} - 0.9}{3} \right\rceil \qquad \text{formula 1.5}$$

wherein the $m_2$ is a timing difference between an uplink DPCCH and an uplink HS-DPCCH of the non-reference cell; and

the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**12.** The method according to claim 9, **characterized in that** when the cell timing difference information is $\tau_{DIFF}$ and it is configured that the non-reference cell needs additional HARQ-ACK processing time, the DRX_OFFSET is:

$$DRX\_OFFSET = \left| \frac{\dfrac{m_2}{10} - 11}{3} \right| - \left| \frac{\dfrac{m_2}{10} + \dfrac{\tau_{DIFF}}{2560} - 11}{3} \right| \qquad \text{formula 1.6}$$

or,

$$DRX\_OFFSET = \left| \frac{\dfrac{m_2}{10} - 11}{3} \right| - \left\lceil \frac{\dfrac{m_2}{10} + \dfrac{\tau_{DIFF}}{2560} - 11}{3} \right\rceil \text{formula 1.7}$$

or,

$$DRX\_OFFSET = \left| \frac{\dfrac{T_{TX\_diff2}}{2560} - 0.9}{3} \right| - \left\lceil \frac{\dfrac{T_{TX\_diff2} + \tau_{DIFF}}{2560} - 0.9}{3} \right\rceil \qquad \text{formula 1.8}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \qquad \text{formula 1.9}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**13.** The method according to claim 10, **characterized in that** the obtaining, by the user equipment, the boundary of the HS-DPCCH of the non-reference cell according to the reception time point of the HS-SCCH specifically comprises:

when it is configured that the non-reference cell does not need additional HARQ-ACK processing time, determining boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or
when it is configured that the non-reference cell needs additional HARQ-ACK processing time, determining boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**14.** The method according to claim 11, **characterized in that** the obtaining, by the user equipment, the boundary of the HS-DPCCH of the non-reference cell according to the reception time point of the HS-SCCH specifically comprises:

determining boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**15.** The method according to claim 12, **characterized in that** the obtaining, by the user equipment, the boundary of the HS-DPCCH of the non-reference cell according to the reception time point of the HS-SCCH specifically comprises:

determining boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**16.** A base station, **characterized in** comprising: a receiving unit, a first calculating unit, and a second calculating unit, wherein
the receiving unit is configured to receive cell timing difference information delivered by a network side, and send the cell timing difference information to the first calculating unit;

the first calculating unit is configured to obtain a reception time point of a high speed-shared control channel (HS-SCCH) through calculation according to the cell timing difference information, and send the reception time point of the HS-SCCH to the second calculating unit; and

the second calculating unit is configured to obtain boundary information of a high speed-dedicated physical control channel (HS-DPCCH) of a non-reference cell according to the reception time point of the HS-SCCH.

**17.** The method according to claim 16, **characterized in that** the cell timing difference information is $\tau_{\text{DIFF}}$, and the $\tau_{\text{DIFF}}$ is a timing difference between paired high speed-physical downlink shared channel (HS-PDSCH) sub-frames of a reference cell and the non-reference cell.

**18.** The base station according to claim 17, **characterized in that** the first calculating unit is further configured to obtain the reception time point of the HS-SCCH through calculation according to formula 1.1, wherein the reception time point is: a combination of CFN_DRX and S_DRX;

$$((5*\text{CFN\_DRX} - \text{UE\_DTX\_DRX\_Offset} + \text{S\_DRX} + \text{DRX\_OFFSET}) \text{ MOD UE\_DRX cycle})$$

$$= 0 \qquad \text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

**19.** The base station according to claim 18, **characterized in that** when it is configured that the non-reference cell does not need additional HARQ-ACK processing time, the DRX_OFFSET is:

$$\text{DRX\_OFFSET} = \left\lfloor \frac{\frac{m_2}{10} - 11}{3} \right\rfloor - \left\lfloor \frac{\frac{m_2}{10} - \frac{\tau_{\text{DIFF}}}{2560} - 11}{3} \right\rfloor \qquad \text{formula 1.2}$$

or,

$$\text{DRX\_OFFSET} = \left\lceil \frac{\frac{m_2}{10} - 11}{3} \right\rceil - \left\lceil \frac{\frac{m_2}{10} - \frac{\tau_{\text{DIFF}}}{2560} - 11}{3} \right\rceil \qquad \text{formula 1.3}$$

or,

$$\text{DRX\_OFFSET} = \left\lfloor \frac{\frac{T_{TX\_diff2}}{2560} - 0.9}{3} \right\rfloor - \left\lfloor \frac{\frac{T_{TX\_diff2} - \tau_{\text{DIFF}}}{2560} - 0.9}{3} \right\rfloor \qquad \text{formula 1.4}$$

or,

$$DRX\_OFFSET = \left\lceil \dfrac{\dfrac{T_{TX\_diff2}}{2560} - 0.9}{3} \right\rceil - \left\lceil \dfrac{\dfrac{T_{TX\_diff2} - \tau_{DIFF}}{2560} - 0.9}{3} \right\rceil \qquad \text{formula 1.5}$$

wherein the $m_2$ is a timing difference between an uplink DPCCH and an uplink HS-DPCCH of the non-reference cell; and

the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**20.** The base station according to claim 18, **characterized in that** when it is configured that the non-reference cell needs additional HARQ-ACK processing time, the DRX_OFFSET is:

$$DRX\_OFFSET = \left\lceil \dfrac{\dfrac{m_2}{10} - 11}{3} \right\rceil - \left\lceil \dfrac{\dfrac{m_2}{10} + \dfrac{\tau_{DIFF}}{2560} - 11}{3} \right\rceil \qquad \text{formula 1.6}$$

or,

$$DRX\_OFFSET = \left\lceil \dfrac{\dfrac{m_2}{10} - 11}{3} \right\rceil - \left\lfloor \dfrac{\dfrac{m_2}{10} + \dfrac{\tau_{DIFF}}{2560} - 11}{3} \right\rfloor \qquad \text{formula 1.7}$$

or,

$$DRX\_OFFSET = \left\lceil \dfrac{\dfrac{T_{TX\_diff2}}{2560} - 0.9}{3} \right\rceil - \left\lceil \dfrac{\dfrac{T_{TX\_diff2} + \tau_{DIFF}}{2560} - 0.9}{3} \right\rceil \qquad \text{formula 1.8}$$

or,

$$DRX\_OFFSET = \left\lceil \dfrac{\dfrac{T_{TX\_diff2}}{2560} - 0.9}{3} \right\rceil - \left\lfloor \dfrac{\dfrac{T_{TX\_diff2} + \tau_{DIFF}}{2560} - 0.9}{3} \right\rfloor \qquad \text{formula 1.9}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = ({}^{T_{TX\_diff2}}/256) + 101.$$

21. The base station according to claim 19, **characterized in that** the second calculating unit is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

22. The base station according to claim 20, **characterized in that** the second calculating unit is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

23. A user equipment, **characterized in** comprising: a receiving unit, a first calculating unit, and a second calculating unit, wherein
the receiving unit is configured to receive cell timing difference information delivered by a network side, and send the cell timing difference information to the first calculating unit;
the first calculating unit is configured to obtain a reception time point of a high speed-shared control channel (HS-SCCH) of a non-reference cell through calculation according to the cell timing difference information, and send the reception time point of the HS-SCCH to the second calculating unit; and
the second calculating unit is configured to obtain a boundary of a high speed-dedicated physical control channel (HS-DPCCH) of the non-reference cell according to the reception time point of the HS-SCCH.

24. The user equipment according to claim 23, **characterized in that** the cell timing difference information specifically is:

DRX_OFFSET or $\tau_{DIFF}$,

wherein the DRX_OFFSET is a DRX offset and is specifically a parameter used to calculate channel timing of a UE in the non-reference cell, and takes a sub-frame as a unit; and the $\tau_{DIFF}$ is a timing difference between paired high speed-physical downlink shared channel (HS-PDSCH) sub-frames of a reference cell and the non-reference cell.

25. The user equipment according to claim 24, **characterized in that** the first calculating unit is further configured to obtain the reception time point of the HS-SCCH through calculation according to formula 1.1, wherein the reception time point is: a combination of CFN_DRX and S_DRX;

$$((5*CFN\_DRX - UE\_DTX\_DRX\_Offset + S\_DRX + DRX\_OFFSET) \; MOD \; UE\_DRX \; cycle)$$
$$= 0 \qquad \text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

25. The user equipment according to claim 24, **characterized in that** when the cell timing difference information is $\tau_{DIFF}$ and it is configured that the non-reference cell does not need additional HARQ-ACK processing time, the DRX_OFFSET is:

$$DRX\_OFFSET = \left| \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \right| \quad \text{formula 1.2}$$

or,

$$DRX\_OFFSET = \left| \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \right| \quad \text{formula 1.3}$$

or,

$$DRX\_OFFSET = \left| \left\lfloor \frac{\frac{T_{TX\_diff2}}{2560} - 0.9}{3} \right\rfloor - \left\lfloor \frac{\frac{T_{TX\_diff2} - \tau_{DIFF}}{2560} - 0.9}{3} \right\rfloor \right| \quad \text{formula 1.4}$$

or,

$$DRX\_OFFSET = \left| \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \right| \quad \text{formula 1.5}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**26.** The user equipment according to claim 24, **characterized in that** when the cell timing difference information is $\tau_{DIFF}$ and it is configured that the non-reference cell needs additional HARQ-ACK processing time, the DRX_OFFSET is:

$$DRX\_OFFSET = \left| \left\lfloor \frac{\frac{m_2}{10} - 11}{3} \right\rfloor - \left\lfloor \frac{\frac{m_2}{10} + \frac{\tau_{DIFF}}{2560} - 11}{3} \right\rfloor \right| \quad \text{formula 1.6}$$

or,

$$DRX\_OFFSET = \left\lceil \frac{\dfrac{m_2}{10} - 11}{3} \right\rceil - \left\lceil \frac{\dfrac{m_2}{10} + \dfrac{\tau_{\text{DIFF}}}{2560} - 11}{3} \right\rceil \quad \text{formula 1.7}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \quad \text{formula 1.8}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} + \tau_{\text{DIFF}}}{2560} - 0.9}{3} \right\rceil \quad \text{formula 1.9}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**27.** The user equipment according to claim 24, **characterized in that** the second calculating unit is further configured to:

when it is configured that the non-reference cell does not need additional HARQ-ACK processing time, determine boundary information of an HS-DPCCH sub-frame that is closest to time of 1280 - $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n; or
when it is configured that the non-reference cell needs additional HARQ-ACK processing time, determine boundary information of an HS-DPCCH sub-frame that is closest to time of 1280 + $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**28.** The user equipment according to claim 25, **characterized in that** the second calculating unit is further configured to determine boundary information of an HS-DPCCH sub-frame that is closest to time of 1280 - $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**29.** The user equipment according to claim 25, **characterized in that** the second calculating unit is further configured to determine boundary information of an HS-DPCCH sub-frame that is closest to time of 1280 + $\tau_{\text{DIFF}}$ chips after the reception time point of the HS-SCCH, namely, a CFN_DRX n radio frame starting point of the HS-SCCH, as boundary information of the HS-DPCCH, namely, HS-DPCCH CFN_DRX n,

wherein n in the CFN_DRX n is a sequence number of the CFN_DRX and n in the HS-DPCCH CFN_DRX n is a sequence number of the HS-DPCCH CFN_DRX.

**30.** A base station, **characterized in** comprising: a receiver and a processor, wherein an output end of the receiver is connected to the processor, wherein

the receiver is configured to receive cell timing difference information delivered by a network side, and send the cell timing difference information to the processor through the output end; and

the processor is configured to obtain a reception time point of a high speed-shared control channel (HS-SCCH) through calculation according to the cell timing difference information, and obtain boundary information of a high speed-dedicated physical control channel (HS-DPCCH) of a non-reference cell according to the reception time point of the HS-SCCH.

**31.** The base station according to claim 30, **characterized in that** the cell timing difference information is $\tau_{\text{DIFF}}$, and the $\tau_{\text{DIFF}}$ is a timing difference between paired high speed-physical downlink shared channel (HS-PDSCH) sub-frames of a reference cell and the non-reference cell.

**32.** The base station according to claim 31, **characterized in that** the processor is further configured to obtain the reception time point of the HS-SCCH through calculation according to formula 1.1, wherein the reception time point is: a combination of CFN_DRX and S_DRX;

$$((5*\text{CFN\_DRX} - \text{UE\_DTX\_DRX\_Offset} + \text{S\_DRX} + \text{DRX\_OFFSET})\ \text{MOD}\ \text{UE\_DRX cycle})$$
$$= 0 \qquad \text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for a UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

**33.** The base station according to claim 32, **characterized in that** when it is configured that the non-reference cell does not need additional HARQ-ACK processing time, the DRX_OFFSET is:

$$\text{DRX\_OFFSET} = \left\lfloor \frac{\dfrac{m_2}{10} - 11}{3} \right\rfloor - \left\lfloor \frac{\dfrac{m_2}{10} - \dfrac{\tau_{\text{DIFF}}}{2560} - 11}{3} \right\rfloor \qquad \text{formula 1.2}$$

or,

$$\text{DRX\_OFFSET} = \left\lceil \frac{\dfrac{m_2}{10} - 11}{3} \right\rceil - \left\lceil \frac{\dfrac{m_2}{10} - \dfrac{\tau_{\text{DIFF}}}{2560} - 11}{3} \right\rceil \qquad \text{formula 1.3}$$

or,

$$DRX\_OFFSET = \left\lfloor \frac{\dfrac{T_{TX\_diff2}}{2560} - 0.9}{3} \right\rfloor - \left\lfloor \frac{\dfrac{T_{TX\_diff2} - \tau_{DIFF}}{2560} - 0.9}{3} \right\rfloor \qquad \text{formula 1.4}$$

or,

$$DRX\_OFFSET = \left\lceil \frac{\dfrac{T_{TX\_diff2}}{2560} - 0.9}{3} \right\rceil - \left\lceil \frac{\dfrac{T_{TX\_diff2} - \tau_{DIFF}}{2560} - 0.9}{3} \right\rceil \qquad \text{formula 1.5}$$

wherein the $m_2$ is a timing difference between an uplink DPCCH and an uplink HS-DPCCH of the non-reference cell; and

the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**34.** The base station according to claim 32, **characterized in that** when it is configured that the non-reference cell needs additional HARQ-ACK processing time, the DRX_OFFSET is:

$$DRX\_OFFSET = \left\lfloor \frac{\dfrac{m_2}{10} - 11}{3} \right\rfloor - \left\lfloor \frac{\dfrac{m_2}{10} + \dfrac{\tau_{DIFF}}{2560} - 11}{3} \right\rfloor \qquad \text{formula 1.6}$$

or,

$$DRX\_OFFSET = \left\lceil \frac{\dfrac{m_2}{10} - 11}{3} \right\rceil - \left\lceil \frac{\dfrac{m_2}{10} + \dfrac{\tau_{DIFF}}{2560} - 11}{3} \right\rceil \quad \text{formula 1.7}$$

or,

$$DRX\_OFFSET = \left\lfloor \frac{\dfrac{T_{TX\_diff2}}{2560} - 0.9}{3} \right\rfloor - \left\lfloor \frac{\dfrac{T_{TX\_diff2} + \tau_{DIFF}}{2560} - 0.9}{3} \right\rfloor \qquad \text{formula 1.8}$$

or,

$$DRX\_OFFSET = \left\lceil \cfrac{\dfrac{T_{TX\_diff2}}{2560} - 0.9}{3} \right\rceil - \left\lceil \cfrac{\dfrac{T_{TX\_diff2} + \tau_{DIFF}}{2560} - 0.9}{3} \right\rceil \qquad \text{formula 1.9}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**35.** The base station according to claim 33, **characterized in that** the processor is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**36.** The base station according to claim 34, **characterized in that** the processor is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as the boundary information of the HS-DPCCH, namely, HS-DPCCH CFN_DRX n,
wherein n in the CFN_DRX n is a sequence number of the CFN_DRX and n in the HS-DPCCH CFN_DRX n is a sequence number of the HS-DPCCH CFN_DRX.

**37.** A user equipment, **characterized in** comprising: an antenna and a processor, wherein
the antenna is configured to receive cell timing difference information delivered by a network side, and send the cell timing difference information to the processor; and
the processor is configured to obtain a reception time point of a high speed-shared control channel (HS-SCCH) of a non-reference cell through calculation according to the cell timing difference information, and obtain a boundary of a high speed-dedicated physical control channel (HS-DPCCH) of the non-reference cell according to the reception time point of the HS-SCCH.

**38.** The user equipment according to claim 37, **characterized in that** the cell timing difference information specifically is:

DRX_OFFSET or $\tau_{DIFF}$,

wherein the DRX_OFFSET is a parameter used to calculate channel timing of a UE in the non-reference cell; and
the $\tau_{DIFF}$ is a timing difference between paired HS-PDSCH sub-frames of a reference cell and the non-reference cell.

**39.** The user equipment according to claim 38, **characterized in that** the processor is further configured to obtain the reception time point of the HS-SCCH through calculation according to formula 1.1, wherein the reception time point is: a combination of CFN_DRX and S_DRX;

$$((5*CFN\_DRX - UE\_DTX\_DRX\_Offset + S\_DRX + DRX\_OFFSET) \text{ MOD UE\_DRX cycle}) = 0$$

$$\text{formula 1.1,}$$

wherein the CFN_DRX is a connection frame number in a DRX status, and the S_DRX is a sub-frame number in the DRX status; the UE_DTX_DRX_Offset and the UE_DRX cycle are DRX parameters configured by the network side for the UE, the UE_DTX_DRX_Offset is an offset between a pattern of DRX and a pattern of DTX, and the UE_DRX cycle is a cycle of the DRX status; and the DRX_OFFSET is a DRX offset and is specifically a parameter used to calculate channel timing of the UE in the non-reference cell, and takes a sub-frame as a unit.

**40.** The user equipment according to claim 39, **characterized in that** when the cell timing difference information is $\tau_{DIFF}$ and it is configured that the non-reference cell does not need additional HARQ-ACK processing time, the DRX_OFFSET is:

$$DRX\_OFFSET = \left\lfloor \frac{\frac{m_2}{10} - 11}{3} \right\rfloor - \left\lfloor \frac{\frac{m_2}{10} - \frac{\tau_{DIFF}}{2560} - 11}{3} \right\rfloor \qquad \text{formula 1.2}$$

or,

$$DRX\_OFFSET = \left\lceil \frac{\frac{m_2}{10} - 11}{3} \right\rceil - \left\lceil \frac{\frac{m_2}{10} - \frac{\tau_{DIFF}}{2560} - 11}{3} \right\rceil \qquad \text{formula 1.3}$$

or,

$$DRX\_OFFSET = \left\lfloor \frac{\frac{T_{TX\_diff2}}{2560} - 0.9}{3} \right\rfloor - \left\lfloor \frac{\frac{T_{TX\_diff2} - \tau_{DIFF}}{2560} - 0.9}{3} \right\rfloor \qquad \text{formula 1.4}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} - \tau_{DIFF}}{2560} - 0.9}{3} \right\rceil \qquad \text{formula 1.5}$$

wherein the $m_2$ is a timing difference between an uplink DPCCH and an uplink HS-DPCCH of the non-reference cell; and
the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**41.** The user equipment according to claim 39, **characterized in that** when the cell timing difference information is $\tau_{DIFF}$ and it is configured that the non-reference cell needs additional HARQ-ACK processing time, the DRX_OFFSET is:

$$DRX\_OFFSET = \left| \left\lfloor \frac{\frac{m_2}{10} - 11}{3} \right\rfloor - \frac{\frac{m_2}{10} + \frac{\tau_{DIFF}}{2560} - 11}{3} \right| \qquad \text{formula 1.6}$$

or,

$$DRX\_OFFSET = \left\lceil \frac{\frac{m_2}{10} - 11}{3} \right\rceil - \left\lceil \frac{\frac{m_2}{10} + \frac{\tau_{DIFF}}{2560} - 11}{3} \right\rceil \qquad \text{formula 1.7}$$

or,

$$DRX\_OFFSET = \left| \left\lfloor \frac{\frac{T_{TX\_diff2}}{2560} - 0.9}{3} \right\rfloor - \frac{\frac{T_{TX\_diff2} + \tau_{DIFF}}{2560} - 0.9}{3} \right| \qquad \text{formula 1.8}$$

or,

$$DRX\_OFFSET = \left\lceil \frac{\frac{T_{TX\_diff2}}{2560} - 0.9}{3} \right\rceil - \left\lceil \frac{\frac{T_{TX\_diff2} + \tau_{DIFF}}{2560} - 0.9}{3} \right\rceil \qquad \text{formula 1.9}$$

wherein the $m_2$ is a timing difference between an uplink DPCCH and an uplink HS-DPCCH of the non-reference cell; and

the $T_{TX\_diff2}$ is a timing difference between an F-DPCH and an HS-PDSCH of the non-reference cell, and a transformation relation between the $T_{TX\_diff2}$ and the $m_2$ is:

$$m_2 = (T_{TX\_diff2}/256) + 101.$$

**42.** The user equipment according to claim 39, **characterized in that** the processor is further configured to:

when it is configured that the non-reference cell does not need additional HARQ-ACK processing time, determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n; or

when it is configured that the non-reference cell needs additional HARQ-ACK processing time, determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

wherein n in the CFN_DRX n is a sequence number of the CFN_DRX and n in the HS-DPCCH CFN_DRX n is a sequence number of the HS-DPCCH CFN_DRX.

**43.** The user equipment according to claim 40, **characterized in that** the processor is further configured to determine boundary information of an HS-DPCCH sub-frame that is closest to time of 1280 - $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

wherein n in the CFN_DRX n is a sequence number of the CFN_DRX and n in the HS-DPCCH CFN_DRX n is a sequence number of the HS-DPCCH CFN_DRX.

**44.** The user equipment according to claim 41, **characterized in that** the processor is further configured to determine boundary information of an HS-DPCCH sub-frame that is closest to time of 1280 + $\tau_{DIFF}$ chips after the reception time point of the HS-SCCH, namely, a CFN_DRX n radio frame starting point of the HS-SCCH, as boundary information of the HS-DPCCH, namely, HS-DPCCH CFN_DRX n,

wherein n in the CFN_DRX n is a sequence number of the CFN_DRX and n in the HS-DPCCH CFN_DRX n is a sequence number of the HS-DPCCH CFN_DRX.

A base station of a non-reference cell receives cell timing difference information delivered by a network side — S11

↓

The base station of the non-reference cell obtains a reception time point of an HS-SCCH through calculation according to the cell timing difference information — S12

↓

The base station of the non-reference cell obtains boundary information of an HS-DPCCH of the non-reference cell according to the reception time point of the HS-SCCH — S13

FIG. 1

A UE receives cell timing difference information delivered by a network side — S21

↓

The UE obtains a reception time point of an HS-SCCH of a non-reference cell through calculation according to the cell timing difference information — S22

↓

The UE obtains boundary information of an HS-DPCCH of the non-reference cell according to the reception time point of the HS-SCCH — S23

FIG. 2

Base station

| Receiving unit | —31 |

| First calculating unit | —32 |

| Second calculating unit | —33 |

FIG. 3

User equipment

| Receiving unit | —41 |

| First calculating unit | —42 |

| Second calculating unit | —43 |

FIG. 4

Base station

Receiver ———51

Processor ———52

FIG. 5

User equipment

Antenna ———61

Processor ———62

FIG. 6

# INTERNATIONAL SEARCH REPORT

| International application No. |
|---|
| **PCT/CN2012/079453** |

**A. CLASSIFICATION OF SUBJECT MATTER**

H04W 56/00 (2009.01) i

According to International Patent Classification (IPC) or to both national classification and IPC

**B. FIELDS SEARCHED**

Minimum documentation searched (classification system followed by classification symbols)

IPC: H04Q; H04M; H04L; H04B; H04W; H04J

Documentation searched other than minimum documentation to the extent that such documents are included in the fields searched

Electronic data base consulted during the international search (name of data base and, where practicable, search terms used)

WPI; EPODOC; CNKI; IEEE; CNPAT: timing, difference, base station; channel, boundary, orientation, reference, cell, time, BS, information

**C. DOCUMENTS CONSIDERED TO BE RELEVANT**

| Category* | Citation of document, with indication, where appropriate, of the relevant passages | Relevant to claim No. |
|---|---|---|
| X | CN 101877908 A (ZTE CORP.), 03 November 2010 (03.11.2010), description, paragraphs 0006-0009 and 0066-0109, and figures 1-8 | 1-2, 8-9, 16-17, 23-24, 31-32, 38-39 |
| A | | 3-7, 10-15, 18-22, 25-30, 33-37, 40-45 |
| A | CN 102340861 A (TD TECH LTD.), 01 February 2012 (01.02.2012), the whole document | 1-45 |
| A | WO 2012/067969 A2 (QUALCOMM INCORPORATED), 24 May 2012 (24.05.2012), the whole document | 1-45 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April 2013 (08.04.2013) | **09 May 2013 (09.05.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Tao** Telephone No.: (86-10) **62413577** |
|---|---|

Form PCT/ISA/210 (second sheet) (July 2009)

EP 2 713 663 A1

## INTERNATIONAL SEARCH REPORT
Information on patent family members

| | International application No. |
|---|---|
| | **PCT/CN2012/079453** |

| Patent Documents referred in the Report | Publication Date | Patent Family | Publication Date |
|---|---|---|---|
| CN 101877908 A | 03.11.2010 | None | |
| CN 102340861 A | 01.02.2012 | None | |
| WO 2012/067969 A2 | 24.05.2012 | US 2012/0120858 A1 | 17.05.2012 |

Form PCT/ISA/210 (patent family annex) (July 2009)